# EUROPEAN PATENT SPECIFICATION

(11) **EP 1 632 364 B1**
(45) Date of publication and mention of the grant of the patent: **05.03.2014**
(21) Application number: 05017907.6
(22) Date of filing: 17.08.2005
(51) Int. Cl.: B60C 11/00, B60C 1/00

(54) **Pneumatic tire of a two-wheeled vehicle**
Luftreifen eines Zweiradfahrzeugs
Bandage pneumatique de vehicule deux-roues

(30) Priority: 07.09.2004 JP 2004259898
(43) Date of publication of application: 08.03.2006
(73) Proprietor: Sumitomo Rubber Industries, Ltd., Hyogo-ken (JP)
(72) Inventor: Kunisawa, Tetsuya, Kobe-shi Hyogo 651-0072 (JP); Matsuo, Toshiro, Kobe-shi Hyogo 651-0072 (JP); Sakamoto, Shuichi, Kobe-shi Hyogo 651-0072 (JP); Otsuji, Hideki, Kobe-shi Hyogo 651-0072 (JP)
(74) Representative: Manitz, Finsterwald & Partner GbR

(56) References cited:
- EP-A- 1 008 466
- US-A- 5 851 321
- US-A1- 2002 000 276
- PATENT ABSTRACTS OF JAPAN vol. 1995, no. 11, 26 December 1995 (1995-12-26) & JP 07 195906 A (SUMITOMO RUBBER IND LTD), 1 August 1995 (1995-08-01)
- PATENT ABSTRACTS OF JAPAN vol. 006, no. 126 (M-142), 10 July 1982 (1982-07-10) & JP 57 051504 A (SUMITOMO RUBBER IND LTD), 26 March 1982 (1982-03-26)
- PATENT ABSTRACTS OF JAPAN vol. 2002, no. 12, 12 December 2002 (2002-12-12) & JP 2002 240510 A (OHTSU TIRE & RUBBER CO LTD :THE), 28 August 2002 (2002-08-28)

## Description

This nonprovisional application is based on Japanese Patent Application No. 2004-259898 filed with the Japan Patent Office on September 7, 2004, the entire contents of which are hereby incorporated by reference.

### BACKGROUND OF THE INVENTION

### Field of the Invention

The present invention relates to a pneumatic tire employing a rubber composition for a tire tread for preventing separation of the tread portion from the tire main body, and superior in grip performance and abrasion resistance, particularly suitable for a racing tire used on a pavement surface.

### Description of the Background Art

In general, it is important that studless tires, all-season tires, and racing tires used on a pavement surface maintain high level in grip performance and abrasion resistance, which are two competing considerations. Conventionally, the studless tire, for example, including a two-layered tread portion with the cap rubber at the outer side and the base rubber at the inner side had the rubber elasticity and friction resistance of the cap rubber ensured under high temperature to exhibit grip performance by blending a softener with a low melting point in an amount greater in the cap rubber than in the base rubber.

In such tread rubber, the softener in the cap rubber will migrate into the base rubber during the running operation of the pneumatic tire, and also scattered onto the road and into the air. There was a problem that the initial tire performance is gradually degraded since aged deterioration (increase) in the hardness of the cap rubber occurs. In view of alleviating degradation in the performance over time in such studless tires and the like, Japanese Patent Laying-Open No. 01-108232 discloses the method of preventing migration of the softener in the tread portion by providing an oil barrier between the tread portion and the belt ply. Although the amount of softener migrating to the belt ply is reduced by this method, migration of the softener onto the road and into the air could not be avoided.

A pneumatic tire having microencapsulated oil blended into the tread portion has been proposed (refer to Japanese Patent Laying-Open No. 01-234441). However, this pneumatic tire is disadvantageous in that the microencapsulated oil facilitates friction of the tread portion against the road to result in degradation in the abrasion resistance.

A tire having liquid polymer blended into the tire tread portion is also disclosed (refer to Japanese Patent Laying-Open No. 63-202636). This tire has migration of the softener in the tread portion only suppressed towards the belt, and the effect thereof was still insufficient.

Document US-A-2002/000276 discloses a pneumatic tire for a front wheel of a motor cycle comprising a tread portion having a two-layered structure comprising of a cap rubber layer and a base rubber layer, wherein the cap rubber layer is harder than the base rubber layer.

Document JP-A-07 195906 which discloses a tire with all features of the preamble of claim 1 describes a motor cycle tire with a tread rubber comprising a cap rubber layer and a base rubber layer which is harder than the cap rubber layer. The cap rubber layer and the base rubber layer are defined by specific ranges of hardness values according to the JIS type A scale and by ranges of loss compliance values.

### SUMMARY OF THE INVENTION

The present invention relates to a pneumatic tire of a two-wheeled vehicle, in accordance with the features of claim 1.

The present invention is directed to a double layer of cap rubber and base rubber, wherein the hardness of the cap rubber, the thickness and the loss tangent (tan δ) value of the base rubber, and the ratio in thickness of the cap rubber to the base rubber are specified. Therefore, separation of the tread portion from the tire main body is prevented while the two competing properties of grip performance and abrasion resistance both can be improved at the same time.

Because a softener mainly based on the liquid styrene-butadiene rubber set forth above is blended into the cap rubber and also preferably the base rubber, the grip performance and abrasion resistance are improved. Further, migration of the softener from the cap rubber to the base rubber can be alleviated.

The foregoing and other objects, features, aspects and advantages of the present invention will become more apparent from the following detailed description of the present invention when taken in conjunction with the accompanying drawing.

### BRIEF DESCRIPTION OF THE DRAWING

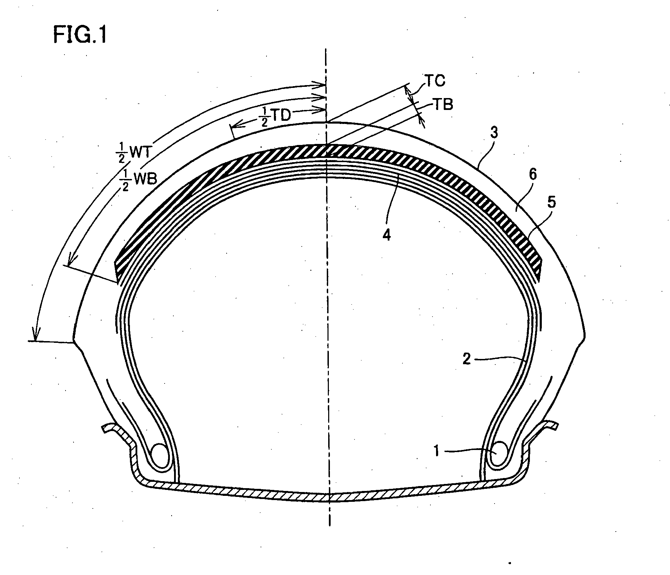

Fig. 1 is a sectional view of a pneumatic tire for a two-wheeled vehicle of the present invention.

### DESCRIPTION OF THE PREFERRED EMBODIMENT

### <Structure of Pneumatic Tire>

Referring to the sectional view of a pneumatic tire according to an embodiment of the present invention shown in Fig. 1, two plies of a carcass ply 2 have respective ends thereof folded around a bead core 1 towards the tread from the inner side to the outer side of the tire. A tread portion 3 on belt ply 4 includes a base rubber 5 at the inner side and a cap rubber 6 overlapping thereon.

### <Cap Rubber>

The cap rubber has the JIS (K6253) type A hardness adjusted to be within the range of 27 to 43. If this hardness of the cap rubber is below 27, the abrasion resistance is insufficient. On the other hand, if the hardness exceeds 43, the grip performance is degraded.

The JIS (K6253) type A hardness was measured at 100°C using a digital hardness tester Model RH-708LE by EXCEL INC., based on a prepared rubber composition.

### <Base Rubber>

The thickness (TB) of base rubber 5 is at least 0.4 mm, preferably 0.5 to 5.0 mm. If the base rubber thickness (TB) is below 0.4 mm, separation of the tread portion will easily occur by a running operation of the pneumatic tire. On the other hand, if this thickness exceeds 5.0 mm, the relative thickness of the cap rubber is so thin that the base rubber will be exposed when the cap rubber is worn away, disadvantageous in wear resistance.

Although the thickness of base rubber 5 can be set substantially identical; or gradually decreasing/increasing from the center of the tire to the end of the tread, the thickness (TB) of base rubber 5 must be at least 0.4 mm at all sites.

In the case where the present invention is applied to a pneumatic tire for a two-wheeled vehicle, the width (WB) of base rubber 5 is preferably at least 80% of the tread ground-contact width (TD) in straight-line driving and within the range of the width (WT) of the tread portion. If the width (WB) of base rubber 5 is less than 80% of the tread ground-contact width (TD), separation of the tread portion will easily occur. As used herein, the tread ground-contact width (TD) in straight-line running is defined as the average ground-contact width with respect to the road surface under the load of 100 kg with the air pressure of 240 kPa. In the case where the present invention is applied to a pneumatic tire for a passenger car, the width (WB) of base rubber 5 is preferably within the range of 70 to 100% the width (WT) of the tread portion.

The loss tangent (tan δ) value of base rubber 5 is at least 0.2. If this value is smaller than 0.2, the grip performance is degraded. The tan δ value of the cap rubber is preferably at least 0.25. The value of loss tangent (tan δ) is based on a rubber piece of approximately 2 mm in thickness, approximately 4 mm in width, and approximately 40 mm in length, taken from a rubber sample of a tire tread portion. The loss tangent value of such rubber pieces was measured under the conditions of initial strain 10%, dynamic strain 5%, oscillation frequency 10Hz, and temperature of 100°C, using a viscoelasticity spectrometer VES-F-3 (by Iwamoto Seisaku-sho Co., Ltd.).

### <TC/TB>

In the present invention, the ratio (TC/TB) of the cap rubber thickness (TC) to the base rubber thickness (TB) is at least 0.45. If TC/TB is less than 0.45, the grip performance of the tread portion is degraded. Specifically, the cap rubber will be entirely worn away by the running operation of the tire, resulting in exposure of the base rubber that is further unfavorable than the cap rubber as to abrasion. Abrasion will be facilitated to result in degradation of the grip performance.

### <Rubber Component>

For the rubber component employed in the cap rubber and base rubber of the present invention, diene-based rubber is used. For example, butadiene rubber, styrene-butadiene rubber, isoprene rubber, and the like generally employed in tires can be cited. From the standpoint of improving grip performance, styrene-butadiene rubber is preferable. Further preferably, at least 50 mass % of styrene-butadiene rubber is included in the rubber component, and one or two types of other diene-based rubber is blended. Styrene-butadiene rubber is advantageous in that grip performance is improved by virtue of the large hysteresis loss, as compared to natural rubber.

### <Liquid Styrene-Butadiene Rubber>

In the case where styrene-butadiene rubber is mainly employed as the rubber component in the present invention, the usage of liquid styrene-butadiene rubber as a softener is advantageous in that the bleeding phenomenon from the surface of the raw material rubber is alleviated. In the present invention, the rubber component can have an arbitrary diene-based polymer mixed within a range that does not exhibit softener bleeding. For example, butadiene polymer, isoprene polymer, acrylonitrile-butadiene copolymer, aromatic vinyl butadiene copolymer, and the like can be mixed.

The liquid styrene-butadiene rubber used in the present invention is a polymer of low molecular weight, having the molecular weight of 600 to 20,000 based on conversion into polystyrene, measured by GPC (Gel Permeation Chromatography). The measurement conditions by GPC are set forth below.

| | |
|---|---|
| Solvent | : THF (tetra-hydrofuran) |
| Concentration | : 0.05 mass % |
| Flow rate | : 1 ml/min |
| Column temperature | : 40 °C |
| Column | : Ultrastyragel (product name) |

If the molecular weight of liquid styrene-butadiene rubber is lower than 600, bleeding occurs from the base rubber and cap rubber, and abrasion is degraded. On the other hand, if the molecular weight exceeds 20,000, the rubber softening effect will become so low that the grip performance cannot be improved. Furthermore, the processability in milling is deteriorated.

### <Other Softeners>

Although a softener is suitably blended into the cap rubber and base rubber in the present invention, it is preferable to also use the liquid styrene-butadiene rubber set forth above. With regards to the cap rubber, at least 60 mass % of the liquid styrene-butadiene rubber set forth above is employed with respect to the entire softener. As a result, increase in the cap rubber hardness during running or by aging can be suppressed while maintaining favorable friction property. The initial tire performance can be maintained for a long period of time.

### <Type of Softener>

In addition to processing oil known as a general softener for rubber, a plasticizer can be used as the softener employed in the present invention. The processing oil includes petroleum type softeners such as paraffinic processing oil, aromatic processing oil, and napthenic processing oil, coal tar type softeners, and fatty oil type softeners. Besides these softeners, various plasticizer compounds such as ester synthetic plasticizers and ether synthetic plasticizers can be used as the softener, as follows:
phthalic acid derivatives such as di-n-octylphthalate and di-butylphthalate, adipic acid derivatives such as di- (2-ethylhexyl) adipate and di-isobutyl-adipate, azelaic acid derivatives such as di- (2-ethylhexyl) azelate, sebacic acid derivatives such as di-(2-ethyhexyl) sebacate, maleic acid derivatives such as di-butylmaleate, fumaric acid derivatives such as di- (2-ethylhexyl) fumarate, trimellitic acid derivatives such as tri-isodecyl-trimellitate, citric acid derivatives such as acetyl triethyl-citrate, oleic acid derivatives such as methyl oleate, trimethylolpropane oleate, recinol acid derivatives such as methyl acetyl-ricinoleate, stearic acid derivatives such as diethylene glycol-di stearate, fatty acid derivatives such as triethylene glycol- dipelargonate, sulfonic acid derivatives such as N-cyclo hexyl-p-toluene sulfonamide, phosphoric acid derivatives such as tributyl phosphate, monoester type plasticizers such as octyl fatty acid ester, glycol derivatives such as triethylene glycol-di-(2-ethylbutylate), glycerol derivatives, paraffinic derivatives, diphenyl derivatives, epoxy derivatives, and the like. These can be used in singularity, or as an arbitrary mixture of two or more thereof.

### <Carbon Black>

In the cap rubber and base rubber of the present invention, 30 to 150 mass of carbon black is blended as a filler with respect to 100 mass of the rubber component. Carbon black preferably has, but not particularly limited to, the iodine adsorption value of 100 to 330 g/kg, oil DBP absorption of 100 to 140 ml/100g, and nitrogen BET adsorption of 120 to 300 m²/g.

### <Other Compounding Agents>

The tread rubber of the present invention can have various additives added, if necessary, by adjusting an appropriate amount within a range that does not depart from the object of the present invention. For example, vulcanizing agents such as sulfur employed in general rubber compositions, vulcanizing auxiliary agents such as zinc oxide (hydrozincite) and stearate, thiazole type accelerators such as mercaptobenzothiazole (MBT), di benzothiazyl disulfide (MBTS), N-tert-butyl-2-benzothiazolyl sulfenamide (TBBS), and N-cyclo hexyl-2-benzothiazyl sulfenamide (CZ), antioxidants such as N-(1, 3-dimethyl butyl)-N'-phenyl-p-phenylenediamine (6c), processing oils such as aromatic oil, naphthenic oil and paraffinic oil, wax, organic fiber, blowing agents and the like.

### <Preparation of Rubber Composition and Tire Formation>

The rubber compositions of the cap rubber and base rubber can be prepared as set forth below. For example, the base rubber composition can be obtained by preparing an appropriate blending amount of each of the components, and base-kneading the components other than the vulcanizing agent and vulcanization accelerator using a Banbury mixer or the like. Then, the vulcanizing agent and vulcanization accelerator are added and mixed using a roller or a Banbury mixer. The time and temperature required for the base kneading and mixing set forth above are not particularly limited, and are to be controlled such that the respective components are mixed together evenly.

The obtained base rubber is assembled with the cap rubber to be extruded and cut using an extruder, for example, followed by formation of a two-layered tread including a predetermined cap rubber and base rubber. A tire can be fabricated through a general method using the formed tread. The obtained tread can be applied to various types of tires such as pneumatic tires for two-wheeled vehicles in addition to pneumatic tires for passenger cars.

### EXAMPLES

A pneumatic tire including the tread formed of the cap rubber and base rubber of the present invention will be described hereinafter. It is to be noted that the present invention is not limited to the examples set forth below.

Table 1 shows the basic blended contents of the cap rubber and base rubber. Sample tires of Examples 1 and 2 of the present invention as well as Comparative Examples 1 to 8 were fabricated using the rubber compositions set forth in Table 1, based on the specification shown in Table 2.

Compounding agents other than sulfur and the vulcanization accelerator were subjected to base-kneading at approximately 150 to 180°C using a Banbury mixer (BB270 by Kobe Steel, Ltd.). Then 1.5 parts of sulfur and 2.5 parts of Nocceler NS were added and mixed at approximately 80 to 110°C to obtain the rubber compositions of cap rubber and base rubber. The obtained base rubber was extruded while being assembled with the cap rubber using an extruder (cold feed extruder by Nakata Engineering Co., Ltd.) to be cut into the desired length. Thus, the tread was obtained.

Then, a rear wheel tire for a two-wheeled vehicle with the tire size of 205/60R17 was fabricated using the tread set forth above. The ground-contact width of the sample tire (inner pressure 240kPa) was 55 mm. The performance test on the obtained tires was conducted by the methods set forth hereinafter.

**Table 1**

| Type | Product Name | Cap Rubber | Base Rubber |
|---|---|---|---|
| SBR | N9550 by Zeon Corporation | 100 | 100 |
| Carbon | N110 by Showa Cabot Kabushiki Kaisha | variate | variate |
| Liquid SBR | Sample Liquid SBR ^{(Note 1)} | 80 | 30 |
| Processing oil | Diana Process PS32 by Idemitsu Kosan Co., Ltd. | variate | variate |
| Wax | SUNNOC wax by Ouchishinko Chemical Industrial Co., Ltd. | 2 | 2 |
| Antioxidant | Santoflex 13 by Flexysis | 2 | 2 |
| Stearate | Kiri by NOF Corporation | 2 | 2 |
| Hydrozincite | Zinc Oxide No. 2 by Mitsui Kinzoku Kougyo | 25 | 2 |
| Sulfur | Sulfur by Karuizawa Seirensho | 1.5 | 1.5 |
| Vulcanization Accelerator | Nocceller by Ouchishinko Chemical Industrial Co., Ltd. | 2.5 | 2.5 |

| | | | |
|---|---|---|---|
| (Note 1) molecular weight: 7000, 50% hydrogenated treated | | | |

**Table 2**

| | | Comparative Example | | | | | | | | Example | |
|---|---|---|---|---|---|---|---|---|---|---|---|
| | | 1 | 2 | 3 | 4 | 5 | 6 | 7 | 8 | 1 | 2 |
| Cap Rubber | Rubber Thickness (TC) mm | 7 | 6.75 | 6.5 | 6.75 | 2 | 6.5 | 6.5 | 6.5 | 6.5 | 2.375 |
| | JIS Type(K6253) A Hardness (100°C) | 33 | 33 | 33 | 33 | 33 | 26 | 44 | 33 | 33 | 33 |
| Base Rubber | Rubber Thickness (TB) mm | - | 0.25 | 0.5 | 0.25 | 5 | 0.5 | 0.5 | 0.5 | 0.5 | 4.75 |
| | tan δ | - | 0.25 | 0.25 | 0.25 | 0.25 | 0.25 | 0.25 | 0.19 | 0.25 | 0.25 |
| | Base Rubber Width (WB) mm | - | 40 | 40 | 50 | 50 | 50 | 50 | 50 | 50 | 50 |
| | (WB/TD) × 100 (Note) | - | 72.7 | 72.7 | 90.9 | 90.9 | 90.9 | 90.9 | 90.9 | 90.9 | 90.9 |
| TC/TB | | - | 27 | 13 | 27 | 0.4 | 13 | 13 | 13 | 13 | 0.5 |
| Grip Performance | | 7 | 7 | 7 | 7 | 6 | 6 | 5 | 5 | 7 | 7 |
| Tread Separation | | Separation Identified | Separation Identified | Separation Identified | Separation Identified | No Separation | No Separation | No Separation | No Separation | No Separation | No Separation |
| Abrasion Appearance After Running | | No Abrasion | No Abrasion | No Abrasion | No Abrasion | No Abrasion | Abrasion Identified | No Abrasion | No Abrasion | No Abrasion | No Abrasion |

| | | | | | | | | | | | |
|---|---|---|---|---|---|---|---|---|---|---|---|
| (Note) Tread ground-contact width (TD) in straight-line driving is 55mm. | | | | | | | | | | | |

### <Performance Test>

### (1) Grip Performance

Each tire was mounted on a racing car, which was actually run on a circuit. The grip performance was evaluated by index based on an organoleptic test. A higher number indicates superior grip performance.

### (2) Tread Separation Evaluation

Each tire was mounted onto a racing car, which was actually run for 70 kilometers on a circuit. The tread separation was visually observed. In Table 2, those of which tread separation could not be observed are indicated as "No Separation", and those of which tread separation could be observed are indicated as "Separation Identified".

### (3) Abrasion Appearance After Run

Each tire was mounted onto a racing car, which was run for 70 kilometers, under the designed normal load defined by JATMA (The Japan Automobile Tire Manufactures' Association). Then, the abrasion appearance of each tire was observed. Those of the level that can withstand race running are indicated as "No Abrasion", and those that are not fit for race running are indicated as "Abrasion Identified" in Table 2.

### <Performance Evaluation Result>

Comparative Example 1 corresponds to a structure absent of base rubber in the tread portion. Comparative Example 2 corresponds to a structure in which the thickness and width of the base rubber are reduced. Comparative Example 3 corresponds to a structure in which the thickness of the base rubber is 0.5 mm, but with insufficient width, leading to tread separation.

Comparative Example 4 corresponds to a structure in which the base rubber width is 50 mm, but with small thickness, leading to tread separation. Comparative Example 5 corresponds to a structure in which the base rubber width is 50 mm and the TC/TB value is 0.4, exhibiting poor grip performance. Comparative Example 6 corresponds to a structure in which the JIS (K6253) type A hardness of the cap rubber is as low as 26, leading to poor abrasion appearance after running. Further, the grip performance was not improved.

Comparative Example 7 corresponds to a structure in which the JIS (K6253) type A hardness of the cap rubber is as high as 44, exhibiting extremely poor grip performance. Comparative Example 8 corresponds to a structure in which the tan δ value is as low as 0.19, exhibiting extremely poor grip performance. Examples 1 and 2 were overall superior in grip performance, tread separation, and abrasion appearance.

The present invention is directed to a double layer of cap rubber and base rubber, wherein the hardness of the cap rubber, the thickness and the loss tangent (tan δ) value of the base rubber, and the ratio in thickness of the cap rubber to the base rubber are specified. Therefore, separation of the tread portion from the tire main body is prevented while the two competing properties of grip performance and abrasion resistance both can be improved at the same time. In particular, a rubber composition for a tire tread particularly suitable for racing tires on pavement roads can be provided.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A pneumatic tire of a two-wheeled vehicle, the tire including a two-layered tread portion having cap rubber at a ground contact surface side and base rubber at an inner side, wherein said cap rubber has a JIS, K6253, type A hardness of 27 to 43 at 100°C, said base rubber has a thickness (TB) of at least 0.4 mm, and a ratio (TC/TB) of a thickness (TC) of said cap rubber to the thickness (TB) of said base rubber is at least 0.45, wherein said base rubber has a loss tangent, tan ð, value of at least 0.2, wherein the value of loss tangent, tan ð is based on a rubber piece of approximately 2 mm in thickness, approximately 4 mm in width, and approximately 40 mm in length, taken from a rubber sample of a tire tread portion, the loss tangent value of such rubber pieces is measured under the conditions of initial strain 10%, dynamic strain 5%, oscillation frequency 10Hz, and temperature of 100 °C, using a viscoelasticity spectrometer VES-F-3 by Iwamoto Seisaku-sho Co., Ltd., the width (WB) of said base rubber being at least 80% of the tread ground-contact width (TD) in straight-line driving and within the range of the width (WT) of the tread portion
**characterized in that**
said cap rubber includes a softener, said softener including at least 60 mass % of liquid styrene-butadiene rubber.

2. The pneumatic tire according to claim 1, wherein the liquid styrene-butadiene rubber has an average molecular weight of 600 to 20,000.

## Patentansprüche

1. Luftreifen eines zweirädrigen Kraftfahrzeugs, wobei der Reifen ein zweischichtiges Laufflächenteilstück mit einem Deckkautschuk auf der Bodenkontaktoberflächenseite und mit einem Basiskautschuk an der Innenseite umfasst, wobei der Deckkautschuk eine JIS K6253 Typ-A-Härte zwischen 27 und 43 bei 100°C aufweist, wobei der Grundkautschuk eine Dicke (TB) von wenigstens 0,4 mm aufweist und das Verhältnis (TC/TB) der Dicke (TC) des Deckkautschuks zu der Dicke (TB) des Grundkautschuks wenigstens 0,45 beträgt, wobei der Grundkautschuk einen Verlusttangens tan δ Wert von wenigstens 0,2 aufweist, wobei der Wert des Verlusttangens tan δ auf einem aus einer Kautschukprobe des Reifenlaufflächenteilstücks entnommenem Kautschukstück mit einer Dicke von ungefähr 2 mm, mit einer Breite von ungefähr 4 mm und mit einer Länge von ungefähr 40 mm basiert, wobei der Wert des Verlusttangens dieser Kautschukstücke unter den Bedingungen von anfänglicher Belastung 10%, dynamischer Belastung 5%, Oszillationsfrequenz 10 Hz, Temperatur 100 °C unter Verwendung eines Viskoelastizitätsspektrometers VES-F-3 von Iwamoto Seisaku-sho Co., Ltd. gemessen wird, wobei die Dicke (WB) des Grundkautschuks beim Fahren in einer geraden Linie und in dem Bereich der Breite (WT) des Laufflächenteilstücks wenigstens 80% der Breite des Laufflächenbodenkontakts (TB) beträgt,
**dadurch gekennzeichnet, dass**
der Deckkautschuk einen Weichmacher enthält, wobei der Weichmacher wenigstens 60 Massen-% von flüssigem Styrol-Butadien-Kautschuk enthält.

2. Luftreifen nach Anspruch 1, wobei der flüssige Styrol-Butadien-Kautschuk ein durchschnittliches Molekulargewicht zwischen 600 und 20.000 aufweist.

## Revendications

1. Pneu pour véhicule deux-roues, le pneu comprenant une partie bande de roulement à deux .couches constituée d'un caoutchouc de recouvrement côté surface en contact avec le sol et d'un caoutchouc de base côté intérieur, dans lequel ledit caoutchouc de recouvrement a une dureté JIS K6253 type A de 27 à 43 à 100°C, ledit caoutchouc de base a une épaisseur (TB) d'au moins 0,4 mm, et le rapport (TC/TB) de l'épaisseur (TC) dudit caoutchouc de recouvrement à l'épaisseur (TB) dudit caoutchouc de base est d'au moins 0,45, ledit caoutchouc de base a une valeur de tangente de perte, tan δ, d'au moins 0,2, la valeur de tangente de perte tan δ se basant sur un fragment de caoutchouc d'environ 2 mm d'épaisseur, d'environ 4 mm de large, et d'environ 40 mm de long, prélevé sur un échantillon de caoutchouc de la partie bande de roulement du pneu, la valeur de tangente de perte de ces fragments de caoutchouc étant mesurée dans des conditions de contrainte initiale de 10 %, contrainte dynamique de 5 %, fréquence d'oscillation de 10 Hz, et température de 100°C, à l'aide d'un spectromètre de viscoélasticité VES-F-3 de chez Iwamoto Seisaku-sho Co., Ltd., la largeur (WB) dudit caoutchouc de base étant d'au moins 80 % de la largeur en contact avec le sol (TD) de la bande de roulement en conduite en ligne droite et dans la plage de la largeur (WT) de la partie bande de roulement
**caractérisé en ce que**
ledit caoutchouc de recouvrement comprend un plastifiant, ledit plastifiant contenant au moins 60 % en poids de caoutchouc styrène-butadiène liquide.

2. Pneu selon la revendication 1, dans lequel le caoutchouc styrène-butadiène liquide a un poids moléculaire moyen de 600 à 20 000.
